# EUROPEAN PATENT SPECIFICATION

(11) **EP 1 585 779 B1**
(45) Date of publication and mention of the grant of the patent: **10.03.2010**
(21) Application number: 03815360.7
(22) Date of filing: 23.01.2003
(51) Int. Cl.: C08G 63/82, C08G 63/85, C08G 63/83, C07F 7/00, B01J 21/06

(54) **CATALYST COMPLEX FOR CATALYSING ESTERIFICATION AND TRANS-ESTERIFICATION REACTIONS AND PROCESS FOR ESTERIFICATION /TRANS-ESTERIFICATION USING THE SAME**
KATALYSATORKOMPLEX ZUR KATALYSE VON VERESTERUNGS- UNDUMESTERUNGSREAKTIONEN UND VERSTERUNGS/UMESTERUNGSVERFAHREN UNTER DESSENVERWENDUNG
COMPLEXE CATALYSEUR DESTINE A CATALYSER LES REACTIONS D'ESTERIFICATION ET DE TRANS-ESTERIFICATION ET PROCEDE D'ESTERIFICATION / TRANS-ESTERIFICATION REPOSANT SUR L'UTILISATION DUDIT COMPLEXE

(43) Date of publication of application: 19.10.2005
(73) Proprietor: SAUDI BASIC INDUSTRIES CORPORATION (SABIC), Riyadh 11422 (SA)
(72) Inventor: SIDDIQUI, Jamil, A., Riyadh 11551 (SA); AL-LUHAIDAN, Khaled, Riyadh 11551 (SA); GUTMANN, Rainer DITF, Institut für Chemierfasern, 73770 Denkendorf (DE); URIA, Aref DITF, Institut für Chemifasern, 73770 Denkendorf (DE); SCHWEIZER, Michael DITF, Institut für Chemiefasern, 73770 Denkendorf (DE); AL-FARHOOD, Bander, Riyadh 11551 (SA); FRITZ, Andreas DITF, Institut für Chemiefasern, 73770 Denkendorf (DE)
(74) Representative: Krijgsman, Willem
(86) International application number: PCT/EP2003/000629
(87) International publication number: WO 2004/065452

(56) References cited:
- GB-A- 866 053
- GB-A- 866 750
- US-A- 2 643 262
- US-A- 3 047 515
- US-A- 3 121 109
- US-A- 3 423 280
- US-A- 3 539 604
- US-A- 4 032 550
- US-A- 4 705 764
- US-A- 4 785 060
- US-A- 5 106 944
- US-A- 5 872 204
- US-A- 6 034 202
- GUTTMAN R. & AL: "Neue Katalysatoren zur Herstellung von Polyethyleneterephthalat und deren Auswirkungen auf die Lichtechtheiten" TEXTIL PRAXIS INTERNATIONAL 1, vol. 1, 1989, pages 29-33, XP001121328 cited in the application

## Description

The present invention relates to a catalyst complex for catalysing esterification and trans-esterification reactions and a process for an esterification/ trans-esterification using the same.

Polyesters and copolyesters are known which represent important polymeric materials for various applications. They are prepared by the reaction of a dicarboxylic acid, preferably an aromatic acid such as terephthalic acid, with a dihydroxy compound, preferably an aliphatic dihydroxy compound such as ethylene glycol, preferably in the presence of a catalyst.

Thermoplastic polyesters are very important polymer materials, produced commercially in large quantities. Linear thermoplastic polyesters such as poly(ethylene terephthalate) (PET) are used in a variety of forms. For example, they may be used in the form of synthetic fibers, which exhibit good resistance to most mineral acids and exhibit excellent resistance to cleaning solvents and surfactants. Thermoplastic polyesters are also used to a great extent as molding materials. Such materials are characterized by many desirable properties, such as hardness, strength, toughness, good chemical resistance, and low moisture absorption.

The production of polyesters, e.g. PET, by polycondensation of diols and alkyl or aryl diacids is well known in the art, as described in the Encyclopaedia of Polymer Science and Engineering, 2nd ed, volume 12, John Wiley and Sons, New York (1988). PET is generally formed into a low molecular weight prepolymer [bis(hydroxyalkyl)ester and oligomers] by converting terephthalic acid with ethylene glycol or by transesterification of dimethyl terephthalate with ethylene glycole in the presence of what is generally called a first stage catalytic additive. The prepolymer is subsequently subjected to polycondensation by esterification and transesterification reactions to form a high molecular weight polyester. Because the transesterification is an inherently slow reaction, which requires holding the reactants at elevated temperatures for protracted periods with concomitant thermal degradation, the polycondensation step is generally catalysed.

It is, however, highly desirable to produce a polyester with high molecular weight and low yellowness at a rate as high as possible. Yellowness in polyesters is normally a result of polymer degradation and side reactions occurring during either polymerisation or down-stream processing. Thus yellowness in the polymer as synthesized is indicative not only of the quality of the polymer so-produced, but also of further processability of the polymer into fabricated forms in colour-sensitive applications such as fibers, films, and certain molded parts. While many - catalysts for production of high molecular weight polyesters are known, they suffer from a deficiency in either rate of conversion, ease of use, or quality of the product formed therewith.

Antimony-containing compounds are currently in wide-spread commercial use as catalysts which provide a desirable combination of high reaction rate and low colour. However, there is considerable inducement to find a substitute for antimony because of the expense and difficulty of handling the toxic antimony in an environmentally responsible manner.

Titanium-based compounds are often used to catalyse polycondensation reactions. These catalysts are non-toxic and their reactivity is even better than the one of antimony catalysts, but it was observed that they cause an undesired yellowish colorization of the polyester.

Some patents comprise a method for producing polyesters and copolyesters in which a titanium compound and an alkalimetal compound are used as catalysts. WO98/56848 discloses coprecipitates as polycondensation catalysts. DE 195 13 056 A1 discloses catalysts on the basis of titanium dioxide or a titanate compound as precipitates. Further in Japanese patent Application 52148593 A the preperation of polyesters is disclosed in the presence of an alkali metal compound by the use of a specific complex compound containing titanium as a catalyst.

In Textil Praxis International 1, 1989, pp. 29-33, a catalyst having equimolar amounts of a titanium glycolate and an alkali metal glycolate is disclosed leading to polyesters with insufficient molecular weight.

It is therefore an object of the present invention to provide a catalyst for catalysing esterification and trans-esterification reactions overcoming the disadvantages mentioned in the prior art, especially to form a polyester with low catalyst concentrations in short reaction times with improved polyester properties, such as reduced yellowish colour and increased molecular weight.

It is another object of the present invention to provide a process for making polyester using the novel catalyst complex.

The first object is achieved by a catalyst complex for catalysing esterification/trans-esterification reactions, comprising:
i) a polymeric titanium glycolate having the formula [TiO₄(CH₂)₄]ₙ wherein n = 1 to 200; and
ii) an alkali metal glycolate
wherein the molar ratio of the polymeric titanium glycolate and the alkali metal glycolate is about 1.25:1 to about 100:1, preferably about 1.25:1 to about 10:1.

Preferably, the alkali metal is sodium and the glycolate has the formula Na-O-CH₂-CH₂-OH.

More preferably, the total content of the catalyst in a mixture of esterification components is 1 to about 70 ppm, preferably about 10 to about 50 ppm, referred to the acid esterification component.

For the second object, normally to make polyesters using the catalyst complex, first a dicarboxylic acid is esterified with a diol, followed by trans-esterification. The catalyst complex is active in both reactions. The carboxylic acid compound is a dicarboxylic acid of the formula HOOC-R-COOH, wherein R is, linear or branched, an alkylen group, an arylene group, and alkenylen group, or a combination thereof.

Preferably R has about 2 to about 30, preferably about 4 to about 15 carbon atoms.

Furthermore, it is preferred that the carboxylic acid compound is selected from the group comprising terephthalic acid, isophthalic acid, naphthalenic diacid, succinic acid, adipic acid, phthalic acid, glutaric acid, oxalic acid, maleic acid, and combinations thereof.

Most preferred is, that the carboxylic acid compound is.terephthalic acid.

Still preferred the carboxylic acid compound is an oligomer having repeating units derived from a carboxylic acid.

It is still preferred, that the alcoholic compound is an alkylene glycol of the formula HO-R'-OH, a polyalkylene glycol having the formula HO-[R"-O-]ₙ-H, or combinations thereof, wherein R' is an alkylene group, linear or branched, having 2 to about 10, preferably 2 to 4 carbon atoms, and wherein R", being the same or different, is an alkylene group having 1 to about 10, preferably 1 to 5 carbon atoms.

Further, the alcoholic compound may be selected from the group comprising ethylene glycol, propylene glycol, isopropylene glycol, butylene glycol, 1-methyl propylene glycol, pentylene glycol, neopentylene glycol, and combinations thereof.

Moreover, in a further embodiment it is preferred, that the process is carried out at a temperature of about 150°C to about 500°C, preferably 250°C to 300°C.

In another embodiment, the process is carried out at a pressure of about 0.001 to about 10 atmospheres.

Further, the molar ratio of the alcoholic compound to the carboxylic acid compound may be in the range of about 0.1:1 to about 10:1, preferably about 1:1 to about 3:1.

It is preferred, that the catalyst is present in the range of about 1 to about 70 ppm of esterification components, preferably about 10 to about 50 ppm, referred to the acid esterification component.

Advantageously, the process may be used for the preparation of poly(ethylene terephthalate).

Surprisingly, it was found that the catalyst complex according to the present invention may form polyesters at high yields in short reaction times. Further, the catalyst complex of the present invention prevents an undesired yellowing of the polyester formed. The molecular weight of the polyester obtained is in a range even higher than for an antimony based catalyst complex and is therefore highly suitable for industrial applications. Further, in the present innovation much higher molecular weights are obtained than with prior art (TPI 1, 1989, pp. 29-33). Additionally, only low catalyst concentrations are needed and hence the total metal content in the polymer is low.

The polymeric titanium glycolate for the inventive catalyst complex has the structural formula: 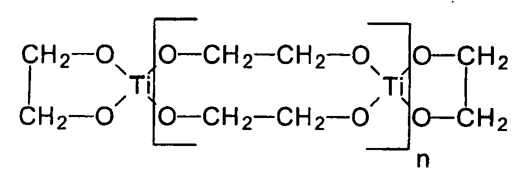 wherein n = 0 to 200.

The polymeric titanium glycolate, which is not soluble in ethylene glycol can be dissolved by adding an alkali metal glycolate to form a complex between the titanium glycolate and the alkali metal glycolate. This catalyst complex may be used, in solution or as a solid, for the preparation of polyesters or copolyesters.

The polymeric titanium glycolate may be synthesised, for example, by converting titanium butylate with ethylene glycol. The alkali metal glycolate can be produced by dissolving elemental alkali metal in ethylene glycol. Titanium glycolate as a polymeric compound can not be dissolved in ethylene glycol. By adding a solution of alkali metal glycolate in ethylene glycol to titanium glycolate a complex is formed which may be dissolved in ethylene glycol obtaining a clear catalyst solution. The complex compound can be precipitated by distilling of ethylene glycol and may be used as a solid as well as a solution in ethylene glycol.

The present invention is further illustrated by the following examples, which are not to be construed as to unduly limit the scope of the invention.

### Example 1 - Preparation of a Ti/Na-glycolate

### 1.1 Synthesis of titanium glycolate

A 500 ml three-necked flask with stirrer, gas inlet for nitrogen and distilling connection tube is filled with 68.0 g (0.2 mole) of Ti-butylate and 124.2 g (2.0 mole) of ethylene glycol. This clear solution is mixed by stirring for 5 min. Under a slow flow of nitrogen the mixture is heated up to 160°C (oil bath temperature). While heating a white solid starts to precipitate. n- Butyl alcohol, which is built during the reaction, is distilled of. The time of reaction is about 9 h. Sometimes it is necessary to increase the temperature of the oil bath up to 180°C to get the theoretical amount of n-butyl alcohol, which is 59.3 g (0,8 mole). The flask is closed with stoppers, and reaction mixture is cooled over night. 100 ml of ethyl acetate are added to that mixture and stirred for 5 min. The solid is filtered off through a G3 frit and washed with 50 ml of ethyl acetate. The product is dried in a desiccator over phosphorus (V) oxide and afterwards for 3 h under vacuum (0.1 mbar) at 60°C. The yield is 33.5 g (0.199 mole/99.7%).

### 1.2 Synthesis of sodium glycolate

In a 500 ml three-necked-flask with stirrer, high-efficiency condenser and gas-inlet for nitrogen, 155.18 g (2.5 mole) of ethylene glycol (MEG) are placed and stirred under N₂-inlet for 15 min. 11.5 g (0.5 mole) of elementary sodium are cut by knife to 0.5 g (0.02 mole) pieces. They are carefully added to the MEG. Development of a small amount of hydrogen can be observed. The mixture is then carefully heated up to 80°C until the total amount of sodium is dissolved. This might occur very fast.

### 1.3 Synthesis of Ti/Na-glycolate complex (here molecular ratio 2:1)

In a 100 ml Erlenmeyer flask equipped with a ground in stopper and placed on a magnetic stirrer 0.2360 g (1.4_{*}10⁻³ mole) of Ti-glycolate and 35 g (0.56 mole) of ethylene glycol are added. The mixture is heated to 120°C and 5.9046g of a 1 wt-% solution of Na-glycolate in ethylene glycole (0.0590 g = 0.7_{*}10⁻³ mole Na-glycolate) is added. The suspenion changes into a clear solution within about 5 min.

### Example 2 - Synthesis of poly(ethylene terephthalate)

A 2 1 reactor equipped with a stirrer and a torque measurement unit is charged with 778.09 g (4.68 mole) of terephthalic acid, 377.90 g (6.09 mole) of ethylene glycol and a specific amount of a solution of a catalyst in ethylene glycol, e.g. the catalyst complex mentioned in example 1.3 [1.4_{*}10⁻³ mole (300 ppm) Ti-glycolate and 0.7_{*}10⁻³ mole (150 ppm) Na-glycolate]. Temperature is increased up to 235°C within 60 minutes and pressure develops around 9 bar. Further, pressure is reduced down to atmosphere within 1h 30min and amount of condensate is collected in a flask. After completion of the pre-esterification reaction, temperature is increased to 260°C within 30 minutes. Temperature is maintained at 260°C for 30 minutes and pressure is reduced to 7 mbar. Further, temperature is increased to 275°C within 10 minutes and pressure is reduced below 10⁻² mbar. At this moment measurement of time for polycondensation is started. Temperature is maintained at 275°C till desired torque of stirrer is obtained (7.5 Nm ≡ about 24,000 g/mol). Condensate can be collected using an ice bath after polycondensation process and granulated. All products were analysed for conversion in terms of number average molecular weight via intrinsic viscosity and colour after complete crystallization of PET.

The example number, the catalyst systems used to polymerise the master batch, the polymer products' L*, a* and b* colour numbers, the time for polycondensation and number average molecular weight are described in the following Table 1,
where at CIE color scale:
L* (lightness) axis - 0 is black, 100 is white
a*(red-green) axis - positive values are red; negative values are green and 0 is neutral
b*(blue-yellow) axis - positive values are yellow; negative values are blue and 0 is neutral.

| Example | Catalyst-PPM (referred to esterification component / here terephthalic acid) | L* | a* | b* | Time for Polykondensati on | Molecul ar Weight Mₙ [g/mol] |
|---|---|---|---|---|---|---|
| 1 | 300 ppm Sb₂Ac₃ | 81.1 | -1.9 | -0.8 | 1h 39min | 23,200 |
| 2 | 300 ppm Ti-glycolate | 78.4 | -1.3 | 8.7 | 1h 38min | 23,100 |
| 3 | 300 ppm Ti-glycolate | 81.0 | -1.6 | 4.3 | 1h 56min | 23,900 |
| | 150 ppm Na-glycolate | | | | | |
| 4 | 409 ppm Ti-glycolate | 80.5 | -1.1 | 3.2 | 1h 24min | 24,100 |
| | 40,9 ppm Na-glycolate | | | | | |
| 5 | 20 ppm Sb₂Ac₃ | 81.7 | -1.7 | -0.2 | 3h 30min | 20.600 |
| 6 | 20 ppm Ti-glycolate | 83,9 | -2.1 | 2.2 | 2h 26min | 24,000 |
| 7 | 50 ppm Ti-glycolate | 83.1 | -2.8 | 4.0 | 1h 25min | 24,200 |
| | 40 ppm Na-glycolate | | | | | |
| 8 | 40 ppm Ti-glycolate | 83.7 | -2.2 | 1.2 | 1h 22min | 23,500 |
| | 30 ppm Na-glycolate | | | | | |
| 9 | 30 ppm Ti-glycolate | 82.6 | -2.6 | 1.0 | 1h 27min | 24,400 |
| | 20 ppm Na-glycolate | | | | | |
| 10 | 20 ppm Ti-glycolate | 85.3 | -2.3 | 0.9 | 1h 34min | 24,000 |
| | 10 ppm Na-glycolate | | | | | |

It was found, that by using the catalyst system Ti/Na-glycolate in various compositions (examples 3,4 and 7-10) time for polycondensation is in the same order compared with time for polycondensation in the case of commercially used antimony catalyst with 300 ppm (referred to terephthalic acid) (example 1). It is disclosed in table 1 that for lower catalyst concentrations the molecular weight of the polyester obtained with antimony catalyst (example 5) is 20,600 g/mol and time for polycondensation is 3h 30min, whereas the molecular weight using Ti-glycolate catalyst (example 6) is 24,000 g/mol and time for polycondensation is shorter (2h 26min). By using catalyst complex system with lower concentrations (examples 7-10) time for polycondensation is lower and molecular weight is higher than by using 300 ppm antimony catalyst. The yellowish colour in case of manufacturing PET, which is high by using pure Ti-glycolate (example 2, b*-value 8,7) can be dramatically reduced by using the catalyst system Ti/Na-glycolate (examples 3, 4 and 7-10) or by decreasing the catalyst concentration (example 6).

## Claims

1. Catalyst complex for catalysing esterification and trans-esterification reactions, comprising:
i) a polymeric titanium glycolate having the formula [TiO₄(CH₂)₄]ₙ wherein n = 1 to 200; and
ii) an alkali metal glycolate
wherein the molar ratio of the polymeric titanium glycolate and the alkali metal glycolate is about 1.25:1 to about 100:1, preferably about 1.25:1 to about 10:1.

2. Catalyst complex according to claim 1, **characterized in that** the alkali metal is sodium and the glycolate has the formula Na-O-CH₂-CH₂-OH.

3. Catalyst complex according to claim 1 or 2, **characterized in that** the total content of the metals of the catalyst complex in a mixture of esterification components is 1 to about 70 ppm, preferably about 10 to about 50 ppm, referred to the acid esterification component.

4. Process for esterification of a carboxylic acid compound and an alcoholic compound using a catalyst complex according to any of the preceding claims 1 to 3, **characterized in that** the carboxylic acid compound is a dicarboxylic acid of the formula HOOC-R-COOH, wherein R is, linear or branched, an alkylene group, an arylene group, an alkenylene group, or a combination thereof.

5. Process according to claim 4, **characterized in that** R has about 2 to about 30, preferably about 4 to about 15 carbon atoms.

6. Process according to claim 4 or 5, **characterized in that** the carboxylic acid compound is selected from the group comprising terephthalic acid, isophthalic acid, naphthalenic diacid, succinic acid, adipic acid, phthalic acid, glutaric acid, oxalic acid, maleic acid, and combinations thereof.

7. Process according to claim 6, **characterized in that** the carboxylic acid compound is terephthalic acid.

8. Process according to claim 4 or 5, **characterized in that** the carboxylic acid compound is an oligomer having repeating units derived from a carboxylic acid.

9. Process according to any of the preceding claims 4 to 8, **characterized in that** the alcoholic compound is an alkylene glycol of the formula HO-R'-OH, a polyalkylene glycol having the formula HO-[R"-O-]ₙ-H, or combinations thereof, wherein R' is an alkylene group, linear or branched, having 2 to about 10, preferably 2 to 4 carbon atoms, and wherein R", being the same or different, is an alkylene group having 1 to about 10, preferably 1 to 5 carbon atoms.

10. Process according to claim 9, **characterized in that** the alcoholic compound is selected from the group comprising ethylene glycol, propylene glycol, isopropylene glycol, butylene glycol, 1-methyl propylene glycol, pentylene glycol, neopentylene glycol, and combinations thereof.

11. Process according to any of the preceding claims 4 to 10, **characterized in that** the process is carried out at a temperature of about 150°C to about 500°C, preferably 250°C to 300°C.

12. Process according to any of the preceding claims 4 to 11, **characterized in that** the process is carried out at a pressure of about 0.001 to about 10 atmospheres.

13. Process according to any of the preceding claims 4 to 12, **characterized in that** the molar ratio of the alcoholic compound to the carboxylic acid compound is in the range of about 0.1:1 to about 10:1, preferably about 1:1 to about 3:1.

14. Process according to any of the preceding claims 4 to 13, **characterized in that** the catalyst is present in the range of about 1 to about 70 ppm of esterification components, preferably about 10 to about 50 ppm, referred to the acid esterification component.

15. Process according to any of the preceding claims 4 to 14, for the preparation of poly(ethylene terephthalate).

## Patentansprüche

1. Katalysatorkomplex zur Katalyse von Veresterungs- und Umesterungsreaktionen, enthaltend:
i) ein polymeres Titanglykolat der Formel [TiO₄(CH₂)₄]ₙ, worin n = 1 bis 200, und
ii) ein Alkalimetallglykolat,
wobei das Molverhältnis von polymerem Titanglykolat zu Alkalimetallglykolat etwa 1,25:1 bis etwa 100:1 und vorzugsweise etwa 1,25:1 bis etwa 10:1 beträgt.

2. Katalysatorkomplex nach Anspruch 1, **dadurch gekennzeichnet, daß** es sich bei dem Alkalimetall um Natrium handelt und das Glykolat die Formel Na-O-CH₂-CH₂-OH aufweist.

3. Katalysatorkomplex nach Anspruch 1 oder 2, **dadurch gekennzeichnet, daß** der Gesamtgehalt der Metalle des Katalysatorkomplexes in einer Mischung von Veresterungskomponenten 1 bis etwa 70 ppm und vorzugsweise etwa 10 bis etwa 50 ppm, bezogen auf die Säure-Veresterungskomponente, beträgt.

4. Verfahren zur Veresterung einer Carbonsäureverbindung und einer alkoholischen Verbindung unter Verwendung eines Katalysatorkomplexes nach einem der vorhergehenden Ansprüche 1 bis 3, **dadurch gekennzeichnet, daß** es sich bei der Carbonsäureverbindung um eine Dicarbonsäure der Formel HOOC-R-COOH, worin R linear oder verzweigt ist und für eine Alkylengruppe, eine Arylengruppe, eine Alkenylengruppe oder eine Kombination davon steht, handelt.

5. Verfahren nach Anspruch 4, **dadurch gekennzeichnet, daß** R etwa 2 bis etwa 30 Kohlenstoffatome und vorzugsweise etwa 4 bis etwa 15 Kohlenstoffatome aufweist.

6. Verfahren nach Anspruch 4 oder 5, **dadurch gekennzeichnet, daß** man die Carbonsäureverbindung aus der Gruppe umfassend Terephthalsäure, Isophthalsäure, Naphthalindisäure, Bernsteinsäure, Adipinsäure, Phthalsäure, Glutarsäure, Oxalsäure, Maleinsäure und Kombinationen davon auswählt.

7. Verfahren nach Anspruch 6, **dadurch gekennzeichnet, daß** es sich bei der Carbonsäureverbindung um Terephthalsäure handelt.

8. Verfahren nach Anspruch 4 oder 5, **dadurch gekennzeichnet, daß** es sich bei der Carbonsäureverbindung um ein Oligomer mit Wiederholungseinheiten, die sich von einer Carbonsäure ableiten, handelt.

9. Verfahren nach einem der vorhergehenden Ansprüche 4 bis 8, **dadurch gekennzeichnet, daß** es sich bei der alkoholischen Verbindung um ein Alkylenglykol der Formel HO-R'-OH, ein Polyalkylenglykol der Formel HO-[R"-O-]ₙ-H oder Kombinationen davon handelt, worin R' für eine lineare oder verzweigte Alkylengruppe mit 2 bis etwa 10 Kohlenstoffatomen und vorzugsweise 2 bis 4 Kohlenstoffatomen steht und R", das gleich oder verschieden ist, für eine Alkylengruppe mit 1 bis etwa 10 Kohlenstoffatomen und vorzugsweise 1 bis 5 Kohlenstoffatomen steht.

10. Verfahren nach Anspruch 9, **dadurch gekennzeichnet, daß** man die alkoholische Verbindung aus der Gruppe umfassend Ethylenglykol, Propylenglykol, Isopropylenglykol, Butylenglykol, 1-Methylpropylenglykol, Pentylenglykol, Neopentylenglykol und Kombinationen davon auswählt.

11. Verfahren nach einem der vorhergehenden Ansprüche 4 bis 10, **dadurch gekennzeichnet, daß** man es bei einer Temperatur von etwa 150°C bis etwa 500°C und vorzugsweise 250°C bis 300°C durchführt.

12. Verfahren nach einem der vorhergehenden Ansprüche 4 bis 11, **dadurch gekennzeichnet, daß** man es bei einem Druck von etwa 0,001 bis etwa 10 Atmosphären durchführt.

13. Verfahren nach einem der vorhergehenden Ansprüche 4 bis 12, **dadurch gekennzeichnet, daß** das Molverhältnis von alkoholischer Verbindung zu Carbonsäureverbindung im Bereich von etwa 0,1:1 bis etwa 10:1 und vorzugsweise etwa 1:1 bis etwa 3:1 liegt.

14. Verfahren nach einem der vorhergehenden Ansprüche 4 bis 13, **dadurch gekennzeichnet, daß** der Katalysator im Bereich von etwa 1 bis etwa 70 ppm von Veresterungskomponenten und vorzugsweise etwa 10 bis etwa 50 ppm, bezogen auf die Säure-Veresterungskomponente, vorliegt.

15. Verfahren nach einem der vorhergehenden Ansprüche 4 bis 14 zur Herstellung von Poly(ethylenterephthalat).

## Revendications

1. Complexe de catalyseur permettant de catalyser des réactions d'estérification et de trans-estérification, comprenant :
i) un glycolate de titane polymère de formule [TiO₄(CH₂)₄]ₙ dans laquelle n = 1 à 200; et
ii) un glycolate de métal alcalin
dans lequel le rapport molaire entre le glycolate de titane polymère et le glycolate de métal alcalin est d'environ 1,25:1 à environ 100:1, de préférence d'environ 1,25:1 à environ 10:1.

2. Complexe de catalyseur selon la revendication 1, **caractérisé en ce que** le métal alcalin est le sodium et le glycolate a pour formule Na-O-CH₂-CH₂-OH.

3. Complexe de catalyseur selon la revendication 1 ou 2, **caractérisé en ce que** la teneur totale en métaux du complexe de catalyseur dans un mélange de constituants d'estérification est de 1 à environ 70 ppm, de préférence d'environ 10 à environ 50 ppm, rapportée au constituant d'estérification acide.

4. Procédé d'estérification d'un composé acide carboxylique et d'un composé alcoolique au moyen d'un complexe de catalyseur selon l'une quelconque des revendications 1 à 3 précédentes, **caractérisé en ce que** le composé acide carboxylique est un acide dicarboxylique de formule HOOC-R-COOH, dans laquelle R est un groupe alkylène, un groupe arylène, un groupe alcénylène, linéaire ou ramifié, ou une combinaison de ceux-ci.

5. Procédé selon la revendication 4, **caractérisé en ce que** R comporte environ 2 à environ 30, de préférence environ 4 à environ 15 atomes de carbone.

6. Procédé selon la revendication 4 ou 5, **caractérisé en ce que** le composé acide carboxylique est choisi dans le groupe comprenant l'acide téréphtalique, l'acide iso-phtalique, le diacide naphtalénique, l'acide succinique, l'acide adipique, l'acide phtalique, l'acide glutarique, l'acide oxalique, l'acide maléique, et des combinaisons de ceux-ci.

7. Procédé selon la revendication 6, **caractérisé en ce que** le composé acide carboxylique est l'acide téréphtalique.

8. Procédé selon la revendication 4 ou 5, **caractérisé en ce que** le composé acide carboxylique est un oligomère comportant des motifs récurrents dérivés d'un acide carboxylique.

9. Procédé selon l'une quelconque des revendications 4 à 8 précédentes, **caractérisé en ce que** le composé alcoolique est un alkylèneglycol de formule HO-R'-OH, un polyalkylèneglycol de formule HO-[R"-O-]ₙ-H, ou des combinaisons de ceux-ci, où R' est un groupe alkylène, linéaire ou ramifié, comportant 2 à environ 10, de préférence 2 à 4 atomes de carbone, et où les radicaux R", qui sont identiques ou différents, 1 représentent des groupes alkylène comportant 1 à environ 10, de préférence 1 à 5 atomes de carbone.

10. Procédé selon la revendication 9, **caractérisé en ce que** le composé alcoolique est choisi dans le groupe comprenant l'éthylèneglycol, le propylèneglycol, l'iso-propylèneglycol, le butylèneglycol, le 1-méthyl-propylèneglycol, le pentylèneglycol, le néopentylène-glycol, et des combinaisons de ceux-ci.

11. Procédé selon l'une quelconque des revendications 4 à 10 précédentes, **caractérisé en ce que** le procédé est effectué à une température d'environ 150°C à environ 500°C, de préférence de 250°C à 300°C.

12. Procédé selon l'une quelconque des revendications 4 à 11 précédentes, **caractérisé en ce que** le procédé est effectué à une pression d'environ 0,001 à environ 10 atmosphères.

13. Procédé selon l'une quelconque des revendications 4 à 12 précédentes, **caractérisé en ce que** le rapport molaire du composé alcoolique au composé acide carboxylique est sur la plage d'environ 0,1:1 à environ 10:1, de préférence d'environ 1:1 à environ 3:1.

14. Procédé selon l'une quelconque des revendications 4 à 13 précédentes, **caractérisé en ce que** le catalyseur est présent en quantité d'environ 1 à environ 70 ppm de constituants d'estérification, de préférence d'environ 10 à environ 50 ppm, rapportée au constituant d'estérification acide.

15. Procédé selon l'une quelconque des revendications 4 à 14 précédentes, permettant la préparation de poly-(éthylène-téréphtalate).
